# EUROPÄISCHE PATENTSCHRIFT

(11) **EP 4 151 857 B1**
(45) Veröffentlichungstag und Bekanntmachung des Hinweises auf die Patenterteilung: **03.04.2024**
(21) Anmeldenummer: 22192870.8
(22) Anmeldetag: 30.08.2022
(51) Int. Cl.: F03D 80/50

(54) **VORRICHTUNG ZUR LOKALEN INSPEKTION UND/ODER REPARATUR UND/ODER BESCHICHTUNG VON ROTORBLÄTTERN EINER WINDENERGIEANLAGE**
DEVICE FOR LOCAL INSPECTION AND / OR REPAIR AND / OR COATING OF ROTOR BLADES OF A WIND TURBINE
DISPOSITIF D'INSPECTION LOCALE ET/OU DE RÉPARATION ET/OU DE REVÊTEMENT DES PALES DE ROTOR D'UNE ÉOLIENNES

(30) Priorität: 17.09.2021 DE 102021124117
(43) Veröffentlichungstag der Anmeldung: 22.03.2023
(73) Patentinhaber: WP Systems GmbH, 01945 Ruhland (DE)
(72) Erfinder: SCHEFFEL, Christoph, 01097 Dresden (DE)
(74) Vertreter: Kailuweit & Uhlemann Patentanwälte Partnerschaft mbB

(56) Entgegenhaltungen:
- DE-A1-102018 120 579
- US-A1- 2011 024 233

## Beschreibung

Gegenstand der Erfindung ist eine Rotorblattbefahranlage als Vorrichtung zur lokalen Inspektion und/oder Reparatur und/oder Beschichtung von hängenden Rotorblättern an Windenergieanlagen (WEAn).

Mit zunehmendem Anteil von ökologischer Stromerzeugung aus Windenergie wächst auch der Bedarf derartiger Anlagen hinsichtlich regelmäßiger Wartung, Reparatur und Instandsetzung. Während das Maschinenhaus und der Turm von WEAn häufig gut zugänglich sind, können die Rotorblätter - insbesondere im montierten Zustand - nur mithilfe technischer Hilfsmittel auf Schäden durch Verwitterung, Vogelschlag oder anderweitiger Fehlerquellen untersucht werden. Im Stand der Technik sind beispielhaft Rotorblattbefahranlagen bzw. Befahranlagen genannt, die die Wartung von Rotorblättern einer WEA im montierten Zustand ermöglichen sollen.

Die DE 10 2018 120 579 A1 beschreibt eine Vorrichtung zum Anordnen eines Aufzugsystems an einer Wandung. Die Vorrichtung weist ein an einem Rahmenelement, welches über ein Fahrwerk in einer horizontalen Richtung an der Wandung abgestützt ist, angeordnetes Aufzugmittel, Befestigungsmittel, welche jeweils über ein Halterungselement mit dem Rahmenelement verbunden sind, und Halterungselemente auf. Das Aufzugmittel ist durch Betätigen der als Seilwinden ausgebildeten Halterungselemente und der als Tragseile ausgebildeten Befestigungsmittel in einer vertikalen Richtung bewegbar. Die Vorrichtung weist zudem ein System zum adaptiven Lastverteilen auf. Dabei ist mindestens eine Seilwinde als Hilfswinde am Rahmenelement befestigt, während mindestens eine Seilwinde als Hauptwinde in der horizontalen Richtung relativ zum Rahmenelement verschiebbar am Rahmenelement derart angeordnet ist, dass bei einer Verschiebung eines Schwerpunkts der Vorrichtung eine konstante Kraftverteilung zwischen einem mit der Hauptwinde verbundenen Haupttragseil und einem mit der Hilfswinde verbundenen Hilfstragseil einstellbar ist. Dieses Dokument betrifft zudem ein Verfahren zum Ausrichten einer Vorrichtung zum Anordnen eines Aufzugsystems an einer Wandung in einer Horizontallage.

Die DE 10 2017 101 354 A1 offenbart eine Rotorblattbefahranlage. An der beschriebenen Befahranlage ist eine aktiv bewegbare Wartungskammer horizontal an einem Abdruckrahmen angeordnet. Der Abdruckrahmen ist dabei am Turm einer Windkraftanlage in vertikaler Richtung geführt und in horizontaler Richtung am Turm abgestützt.

Gekennzeichnet ist die Befahranlage dadurch, dass der Abdruckrahmen ein Querprofil und zwei zueinander über das Querprofil beabstandete Längsprofile aufweist. Jedes der Längsprofile des Abdruckrahmens ist über ein Schwenkgelenk mit dem Querprofil in der horizontalen Ebene drehbeweglich verbunden. Die Wartungskammer ist dabei auf zwei Seiten entlang der Längsprofile in Turmradiusrichtung unabhängig voneinander mittels Antriebseinheiten bewegbar und an den Längsprofilen unabhängig voneinander temporär fixierbar ausgebildet. Des Weiteren wird ein Verfahren zum Betreiben der beschriebenen Rotorblattbefahranlage offenbart.

In DE 10 2010 060 639 A1 wird eine Arbeitsbühnenanlage für die vollumfängliche Befahrung von etwa vertikal ausgerichteten Objekten, insbesondere für die Rotorblattbefahrung bei Windkraftanlagen, offenbart. Die beschriebene Arbeitsbühne ist passiv vertikal verfahrbar und leicht in ihrer horizontalen Position stabilisierbar. Die offenbarte Arbeitsbühne und die zugehörige Trageinrichtung werden am Kranseil eines Lastkrans angeordnet, welcher insbesondere im Maschinenhaus einer Windkraftanlage befestigt ist. Dabei ist die Trageinrichtung in der Weise ausgebildet, dass die Arbeitsbühne auch bei ungleichmäßiger Belastung eine annähernd waagerechte Position behält.

In DE 20 2007 002 930 U1 ist eine Hebebühne mit mehreren Bühnenelementen für Befahranlagen zur Wartung der Rotorblätter von Windkraftanlagen offenbart. Die Bühnenelemente sind dabei um eine Öffnung herum angeordnet, deren Öffnungsquerschnitt durch Bewegen wenigstens eines Bühnenelementes relativ zu einem anderen Bühnenelement mittels eines Stellantriebs an die Abmessungen des Rotorblattes anpassbar ist. Gekennzeichnet ist diese Hebebühne dadurch, dass zwei mittels eines Schwenkgelenks an einem Ende miteinander verbundenen Arbeitsbühnen die beweglichen Bühnenelemente bilden. Der Stellantrieb ist dabei jeweils an den anderen Enden der Arbeitsbühnen angeordnet.

Die WO 2019//047 998 A1 beschreibt eine Vorrichtung zum Anordnen eines Aufzugsystems an einer Wandung. Die Vorrichtung weist dabei einen Abdruckrahmen sowie ein Aufzugmittel auf, welches über einen Tragrahmen mit dem Abdruckrahmen verbunden ist. Der aus ehem Querträger und zwei zueinander über den Querträger beabstandet angeordnete Längsträger ausgebildete Abdruckrahmen ist über ein Fahrwerk in einer horizontalen Richtung an der Wandung abgestützt angeordnet und in einer vertikalen Richtung bewegbar ausgebildet. Der Tragrahmen ist mit dem Aufzugmittel entlang der Längsträger in der horizontalen Richtung verschiebbar gehaltert. Die jeweils an einem Basiselement mit dem Querträger verbundenen Längsträger sind jeweils aus lösbar miteinander verbindbaren Längsträgerelementen ausgebildet und weisen Verlängerungselemente zum Auslenken der Längsträger auf. Die Verlängerungselemente sind im nicht ausgelenkten Zustand der Längsträger jeweils in einer am Tragrahmen ausgebildeten Aufbewahrungseinheit sowie im an der Wandung angeordneten Zustand der Vorrichtung zum Auslenken der Längsträger je nach Bedarf aus der Aufbewahrungseinheit entnehmbar und in einem ausgelenkten Zustand der Längsträger an freien Enden der Längsträger, die Ausdehnung der Längsträger in einer Längsrichtung verändernd, angeordnet. Weiterhin wird ein Verfahren zum Bedienen dieser Vorrichtung, insbesondere zum Montieren eines Abdruckrahmens und zum Auslenken von Längsträgem, beschrieben.

Die DE 10 118 906 B4 offenbart eine Vorrichtung für die Beschichtung von Rotorblättern von Windkraftanlagen zur Ausbildung funktioneller Oberflächen. Die Vorrichtung weist dazu eine das Rotorblatt partiell aufnehmende Kammer auf, die in Längserstreckung des Rotorblattes verstellbar ausgebildet ist. Der Innenraum der Kammer ist dabei gegenüber der Umgebung abgedichtet und ist dadurch gekennzeichnet, dass durch das Einbringen des Rotorblattes in die Kammer sich innerhalb der Kammer einzelne Kammerbereiche ausbilden, die jeweils durch das Rotorblatt und die Einhausung der Kammer begrenzt sind. In den Kammerbereichen der Kammer sind dabei begehbare Vorkehrungen vorgesehen, die die Kammerbereiche zur Ausbildung von Kabinen oder Arbeitsräumen horizontal und/oder vertikal teilen.

US 2011 / 0024233 A1 offenbart eine aufhängbare Wartungsplattform für den Zugang zu einem Blatt einer Windturbine. Die Plattform umfasst Arme zum Halten einer Wartungseinheit, wobei die Arme jeweils mit einem Gelenk versehen sind, das eine ebene Bewegung ermöglicht; einen Rahmen, an dem jeder Arm in einem Gelenk, eine ebene Bewegung ermöglicht, beweglich angebracht ist; Mittel zum Tragen des Rahmens in Bezug auf den Turbinenturm; wobei die Wartungseinheit gleitend an den Armen befestigt ist, die zum Positionieren der Plattform in Bezug auf das Blatt ausgebildet, und wobei der Rahmen so konstruiert ist, dass er sich in unmittelbarer Nähe des Turbinenturms befindet.

Die aus dem Stand der Technik bekannten Rotorblattbefahranlagen erreichen auf Grund der immer größer werdenden Rotorblätter der WEAn enorme Abmessungen. Die erhöhte Komplexität und die großen Gesamtmassen führen zu einem erheblichen Transport-, Handhabungs- und Instandhaltungsaufwand. Zudem schlagen sich die großen Abmessungen in komplizierten Klapp- und Faltmechanismen nieder, die für einen StVO-konformen Straßentransport erforderlich sind. Diese bedingen ihrerseits lange Rüstzeiten. Jene Zeit, die benötigt wird um vom Transportzustand in den Einsatzzustand bzw. vom Einsatzzustand in den Transportzustand zu gelangen, wächst nachteilig mit zunehmender Masse und/oder Komplexität. Dies hat unter anderem negative Auswirkungen auf die Wirtschaftlichkeit der jeweils betroffenen Befahranlagen.

Des Weiteren sind diese geometrischen Abmessungen und die daraus resultierenden Massen kaum mit den Anforderungen für eine Befahrung der Rotorblätter von Offshore-\NEAn zu vereinbaren.

Viele der genannten Systeme können den Zugang in Wurzelnähe der Rotorblätter nicht ermöglichen, weil der Blattquerschnitt nicht in die Öffnung der zugehörigen Arbeitsplattformen oder Kammern passt. Bei der Verwendung von seilgetragenen Systemen kommt es in Wurzelnähe der Rotorblätter zu einer starken Schräglage des tragenden Seils. Damit verbunden können die wirkenden Horizontalkräfte auf ein zerstörerisches Maß anwachsen. Die Befahranlage ist somit in diesem Bereich nicht sicher betreibbar. In anderen Bereichen sind diese Horizontalkräfte auf Grund einer zu geringen Schräglage des Seils derart gering, dass eine sichere Führung am Turm nicht gegeben ist. Dadurch neigen seilgetragene Systeme durch den Einfluss von Seitenwind - welcher an den Standorten von WEAn zu erwarten ist - zu gefährlichen Befahrsituationen, wie beispielsweise zum Kippen um den Turm.

Die aus dem Stand der Technik bekannten Vorrichtungen mit drei Winden besitzen, zusätzlich zu den ebenfalls aus dem Stand der Technik bekannten Vorrichtungen mit zwei Winden, eine Winde am Abdruckrahmen, welche häufig nah am Turm angeordnet ist und somit nachteilig nicht in jeder Befahrsituation zugänglich ist. Somit sind aufwändige Konstruktionen zur elektrischen - und im Notbetrieb auch mechanischen - Fernbedienung der Winde notwendig, was sich wiederum nachteilig auf die Komplexität, Gesamtmasse und Wirtschaftlichkeit der gesamten Befahranlage auswirkt.

Einen weiteren Nachteil stellt der Umstand dar, dass die Zuladung aktueller Befahranlagen häufig konstruktionsbedingt nicht messbar ist, obwohl dies die Sicherheitsbestimmungen erfordern. In den Ausführungen, bei denen die Messung der Zuladung realisiert ist, ist diese Art der Messung nur unter hohem technischen Aufwand durchführbar.

Aus dem Stand der Technik bekannte Befahranlagen, die sich mit Hilfe eines Abdruckrahmens am Turm abstützen und an einer Seite des Rotorblatts hälftig anliegen, weisen häufig die Makel der mangelnden Einstellbarkeit ihrer Position und der mangelnden Einstellbarkeit der Position tragender Seile auf. Dies ist nachteilig, da so die Gefahr der Kollision der tragenden Seile mit dem darüber liegenden Rotorblatt besteht. Zusätzlich zeichnen sich derartige Befahranlagen nachteilig durch schlechte Zugänglichkeit bestimmter Bereiche des Rotorblatts, insbesondere durch schlechte Befahrbarkeit der Lee-Seite eines Rotorblatts in Wurzelnähe, aus.

Nachteilig an den aus dem Stand der Technik bekannten Rotorblattbefahranlagen, die das Rotorblatt an einem bestimmten Querschnittallseitig umschließen, sich an ebendiesem Rotorblatt abstützen und keinen Abdruckträger aufweisen ist, dass die Abstützung an den Rotorblättern insbesondere an der Vorderkante der Rotorblätter erfolgt. Dieser Bereich ist durch Erosion jedoch besonders häufig beschädigt, erfordert die eigentliche Reparatur und ist als Abstützung für die Befahranlage ungeeignet. Dies schränkt somit nachteilig den Einsatzbereich und somit die Wirtschaftlichkeit einer solchen Rotorblattbefahranlage ein.

Aufgabe der Erfindung ist es, eine kompakt ausgebildete, stabile und sichere Rotorblattzugangstechnik vorzuschlagen, welche die offensichtlichen Nachteile des Standes der Technik überwindet.

Ein erster Aspekt der Erfindung betrifft eine Vorrichtung zur lokalen Inspektion, zur Reparatur und/oder zur Beschichtung von Rotorblättern einer Windkraftanlage, umfassend mindestens einen Turm, welche die folgenden Komponenten aufweist:
- mindestens eine wettergeschützte Kapsel zur Beherbergung von Personen,
- mindestens einen in Segmenten ausgebildeten Abdruckträger, umfassend mindestens ein Segment mit einem Schrägseilarm, wobei der Schrägseilarm mindestens eine kraftumformende Einrichtung aufweist,
- mindestens einen Querträger,
- mindestens ein Fahrwerk sowie
- ein Aufhängungssystem, welches die Komponenten verbindet, umfassend mindestens zwei Aufhängungspunkte, wobei mindestens zwei Aufhängungspunkte am Abdruckträger angeordnet sind, mindestens eine kraftumformende Einrichtung, sowie mindestens zwei Seilwinden.

Erfindungsgemäß ist die Kapsel dabei hängend am turmfernsten Segment des Abdruckträgers befestigt und weist mindestens eine Verstellmöglichkeit auf, die dazu ausgebildet ist, die Kapsel in mindestens einer der orthogonalen Raumachsen gezielt zu positionieren. Durch die hängende Anordnung der Kapsel ist vorteilhaft eine exakte Messbarkeit der Zuladung oder der wirkenden Zugkräfte von der Kapsel auf die tragenden Teile der Vorrichtung gegeben.

Im Sinne der Erfindung wird unter der gezielten Positionierung sowohl translatorisches- als auch rotatorisches Ändern der Position der Kammer verstanden. Die Zielvorgaben für die angestrebte Änderung ergeben sich dabei beispielsweise - ohne darauf beschränkt zu sein - entweder aus der Position von Kammer und Rotorblättern zueinander, aus einer zu korrigierenden Lage der Kammer gegenüber Turm oder Erdboden oder aus beiden genannten Gründen.

Im Sinne der Erfindung stützt sich der, zur gesamten erfindungsgemäßen Vorrichtung gehörige und in Segmenten ausgebildete, Abdruckträger seinerseits am Turm mittelbar oder unmittelbar ab und ist entlang des Querträgers verschiebbar ausgebildet. In Ausführungsformen ist die erfindungsgemäße Vorrichtung als Rotorblattbefahranlage ausgebildet.

Im Sinne der Erfindung weist eine WEA mindestens einen Turm und ein Maschinenhaus auf. Unter dem Turm wird hierbei das tragende Element einer WEA verstanden und gründet in der Erde oder auf einer schwimmenden Plattform. Der Turm weist mindestens ein Rotorblatt auf. An der Turmspitze ist das Maschinenhaus angeordnet. Der Begriff Windenergieanlage wird dabei synonym zum Begriff Windkraftanlage und umgekehrt verwendet.

Der Turm legt dabei eine Orientierung fest. Dabei werden im Folgenden die Begriffe "turmseitig" bzw. "turmnah" sowie "turmfern" verwendet. Diese Orientierung bezieht sich auf die bestimmungsgemäße Montage der erfindungsgemäßen Befahranlage - ohne dies nur auf den Zusammenbau zu beschränken. Die Begriffe "turmseitig" bzw. "turmnah" werden entlang der Längsrichtung der Befahranlage angewendet. Während des bestimmungsgemäßen Einsatzes zeigt das turmseitige bzw. turmnahe Ende der Befahranlage in Richtung des Turmes und das turmferne Ende weist vom Turm weg, es ist sozusagen turmabgewandt.

Erfindungsgemäß ist am turmseitigen Segment des Abdruckträgers das Fahrwerk angeordnet. Das Fahrwerk umfasst im Sinne der Erfindung mindestens einen Querträger, welcher mit mindestens einem Führungselement ausgestattet ist. Der Querträger ist erfindungsgemäß um mindestens eine Raumachse schwenkbar ausgebildet.

Im Folgenden wird unter dem Begriff des Aufhängungssystems jener mechanische Teil der Vorrichtung verstanden, welcher die erfindungsgemäße Rotorblattbefahranlage mit dem Turm der Windkraftanlage kraftführend - bevorzugt durch eine Seilverbindung - verbindet. Zum Aufhängungssystem zählen somit mindestens zwei am Abdruckträger befindliche Aufhängungspunkte, welche der Seilführung dienen. Des Weiteren zählen kraftumformende Einrichtungen, wie beispielsweise und ohne darauf beschränkt zu sein, Rollen oder Flaschenzüge, dazu. Zusätzlich sind auch mindestens zwei Seilwinden mit umfasst.

Die mindestens zwei Seilwinden des Aufhängungssystems sind im Sinne der Erfindung am turmfernsten Segment des Abdruckträgers angeordnet. Mindestens ein Seil wird dabei erfindungsgemäß von der jeweiligen Seilwinde über die kraftumformende Einrichtung zu den Aufhängungspunkten geleitet. Die kraftumformende Einrichtung ist im Sinne der Erfindung am turmfernsten Segment des Abdruckträgers angeordnet.

Der Schrägseilarm ist derart angeordnet und ausgebildet, dass er im Sinne der Erfindung entlang seiner Längs- und Querachsen mindestens schwenkbar ausgebildet ist. Die Schwenkbarkeit entlang der Längsrichtung sorgt für eine aktive Beeinflussung der wirkenden Kräfte auf das Schrägseil - insbesondere auf die horizontale Komponente der wirkenden Kraft. Die Schwenkbarkeit in Querrichtung ist vorteilhaft, um Schräglagen zu vermeiden. Auch wird eine Drehung der Anlage um die in Querrichtung orientierte Horizontalachse vorteilhaft ermöglicht.

Insgesamt lässt sich durch die Schwenkbarkeit der gesamten Anlage eine Justage derart vornehmen, dass die Längsachse und eine Querachse der Anlage nach Ihrer Justage innerhalb der Horizontalebene liegen.

Durch die Schwenkbarkeit der kraftumformenden Einrichtung des Schrägseilarmes kann zusätzlich der Lagerungspunkt der Befahranlage positioniert werden und dadurch die Vermeidung von Kollisionen des tragenden Seils mit einem eventuell oberhalb der Kapsel befindlichen Rotorblatt bewirkt werden.

Vorteilhaft bedingt der Einsatz von nur zwei Aufhängungspunkten eine erzwungene Reduktion der Gesamtmasse. Dieser Vorteil wird weiterhin dadurch verstärkt, dass die einzusetzende Kapsel kompakt und nur so groß ausgeführt wird, wie diese für die Blattarbeiten nötig ist. Zusätzlich entfällt durch die erfindungsgemäße Konstruktion der sonst übliche Tragrahmen, was sich ebenfalls als direkte Maßnahme zur Massenreduktion und Erhöhung der Kompaktheit erweist. Trotz des Einsatzes von nur zwei Aufhängungspunkten wird vorteilhaft eine sehr stabile Lage der erfindungsgemäßen Vorrichtung erreicht, da selbst bei Verschiebung der Zuladung innerhalb der Kapsel die auftretende Änderung des Schwerpunktes mittels der erfindungsgemäßen Vorrichtung bis zum Erreichen einer stabilen Lage kompensiert werden kann. Unter einer stabilen Lage der Vorrichtung wird im Folgenden die geringe Kippneigung der Vorrichtung und eine sichere Führung am Turm verstanden.

Durch die kompakte Bauform sind weiterhin keine oder kaum Modifikationen für den Transport erforderlich, gleichzeitig wird dadurch eine sehr gute Eignung für den Offshore-Einsatz erreicht, da für die erfindungsgemäße Vorrichtung kaum Aufstellflächen zur Inbetriebnahme der Vorrichtung, auch nicht an den Offshore-WEAn, notwendig sind. Ein weiterer Vorteil der kompakten Bauform erwächst aus der Gewährleistung eines zweckmäßigen partiellen Zuganges zu fast allen Bereichen der Rotorblätter. Der Zugang ist sowohl an der Blattspitze, als auch in Wurzelnähe der Rotorblätter durch die Vorrichtung vorteilhaft gewährleistet.

Generell wird durch die erfindungsgemäße Konstruktion im Betrieb vorteilhaft eine hilfsmittelfreie Zugänglichkeit der Seilwinden durch das Anwenderpersonal ermöglicht. Dies ist vorteilhaft, da es direkt zur Sicherheit des Anwenderpersonals beiträgt.

Unter einem Abdruckträger wird im Sinne der Erfindung ein bestimmungsgemäß horizontal verlaufender, im Verhältnis zu seiner Länge schmaler und schlanker Balken verstanden, der die anliegenden Lasten durch das Zusammenspiel mit seiner Aufhängung an die Wände des Turms einer WEA oder geeignete senkrechte Stützen einer WEA ableitet. Dabei ist der Abdruckträger nicht auf eine Art von Balken beschränkt.

Die kraftumformende Einrichtung, welche am Schrägseilarm angebracht ist, ermöglicht im Sinne der vorliegenden Erfindung, dass die wirkenden Kräfte in Betrag und/oder in Richtung durch Vorrichtungsmerkmale geändert werden können. Ohne darauf beschränkt zu sein, werden beispielhaft die Umlenkrolle, der Flaschenzug, eine gleitend ausgebildete Seilführung oder die Hebelanordnung oder eine Kombination daraus als Ausgestaltungen der kraftumformenden Einrichtung genannt. Die kraftumformende Einrichtung- beispielsweise in Form der Umlenkrolledient in Kombination mit dem erfindungsgemäßen Schrägseilarm zur gezielten Anpassung der Position des Aufhängungspunkts des turmfernen Tragseils relativ zum Schwerpunkt der Gesamtanlage. Diese Position kann dadurch sowohl in Längs- als auch in Querrichtung variiert werden.

In Ausführungsformen der Erfindung ist die kraftumformende Einrichtung als Umlenkrolle ausgebildet, welche am Ende des Schrägseilarmes angebracht ist. Durch diese Einfachheit der kraftumformenden Einrichtung wird vorteilhaft weiterhin ein hohes Maß an Komplexität der gesamten Vorrichtung verhindert und zusätzlich Masse eingespart. Des Weiteren wird an dieser Stelle die Messung von Betriebsparametern wie bspw. Seilspannung ermöglicht, wodurch sich vorteilhaft die Überwachungssituation sicherheitsrelevanter Parameter, wie bspw. Änderung der Seilspannung durch Seitenwind, verbessert.

In Ausführungsformen ist die kapselnahe Umlenkung am Schrägseilarm angeordnet, der am turmfernsten Segment des Abdruckträgers befestigt und in den Vertikalebenen schwenkbar gestaltet ist. Durch diese Verstellmöglichkeit kann das Schrägseil und somit die Horizontalkraft in Richtung Turm vorteilhaft gezielt eingestellt werden. Dieser speziell ausgebildete Schrägseilarm wird im Sinne der Erfindung auch Schwenkarm genannt.

Als Fahrwerk werden im Sinne der Erfindung die Gesamtheit aller Teile einer Rotorblattbefahranlage bezeichnet, die eine Verbindung der gesamten Vorrichtung mit ihrem Fahrweg herstellen. Der Fahrweg ist dabei im Sinne der Erfindung die Außenwand des Turms einer WEA. Zum Fahrwerk zugehörig sind Führungselemente. Unter Führungselementen werden im Sinne der Erfindung jene Einrichtungen verstanden, welche ermöglichen, dass die Vorrichtung entlang einer vorgegebenen Bahn verschoben werden kann. Ohne darauf beschränkt zu sein, seien hier Räder, Rollen und Schienen sowie Kettenraupen oder Kombinationen daraus beispielhaft genannt.

Ein Aufhängungspunkt ist im Sinne der Erfindung eine bauliche Einrichtung, um eine mechanische Verbindung zwischen der Befahranlage und der WEA zu schaffen. So können beispielsweise, und ohne darauf beschränkt zu sein, ein oder mehrere Aufhängungspunkte an einer WEA ausgewiesen sein. An diesen ausgewiesenen Aufhängungspunkten werden nun Seile befestigt, die ihrerseits an den Aufhängungspunkten einer Befahranlage angebracht sind und die mechanische Verbindung ausbilden.

Eine Verstellmöglichkeit ist im Sinne der Erfindung eine Einrichtung, welche eine translatorische oder rotatorische Änderung der Position bewirkt. In Ausführungsformen ist die Verstellmöglichkeit als Drehverbindung ausgebildet. Die Änderungen der Position werden dabei händisch oder mechanisiert realisiert.

In bevorzugten Ausführungsformen der Erfindung ist die Kapsel beweglich entlang der Längsrichtung mindestens eines Segments des Abdruckträgers angeordnet. Auf diese Weise wird vorteilhaft eine verbesserte Anpassung an die Geometrien und Abmessungen unterschiedlicher WEAn erreicht. Somit wird generell eine Verbesserung der Anwendbarkeit der Befahranlage erzielt, da die Befahranlage an die jeweilig vorgefundene Situation im Einsatz anpassbar ist. Dies hat vorteilhaft eine Erhöhung der Wirtschaftlichkeit der Befahranlage zur Folge, da mit nur einer Vorrichtung eine Vielzahl gängiger Bauformen von WEAn gewartet, inspiziert und/oder repariert werden können.

In bevorzugten Ausführungsformen der Erfindung ist die Kapsel hängend in ihrer Horizontalebene zur Drehung um mindestens 180° und bis zu 360 ° ausgebildet. Dadurch wird vorteilhaft der Bedien- und Benutzerkomfort der Befahranlage erhöht, da unter anderem Ein- und Ausstieg des Anwenderpersonals erleichtert wird. Des Weiteren wird eine verbesserte Anpassbarkeit an die Rotorblattflächen unterschiedlicher WEAn ermöglicht. Dies hat eine deutliche Erhöhung der Wirtschaftlichkeit der Befahranlage zur Folge, da somit auch der Einsatz der Befahranlage bei defekten Stellmotoren - welche für die Winkelstellung der Rotorblatter bezüglich der Windrichtung Sorge tragen - ermöglicht wird. Somit sind innerhalb eines gegebenen Zeitfensters mehrere Reparaturtätigkeiten ausführbar.

In bevorzugten Ausführungsformen weist die Kapsel in ihrer Draufsicht mindestens zwei unterschiedlich ausgeformte Zugangsseiten auf, wobei diese Zugangsseiten Anpassungen an je eine konkave und/oder konvexe Rotorblattkontur aufweisen.

In Ausführungsformen der Erfindung weist die Kapsel in ihrer Draufsicht einen vierseitigen, zumindest teilweise viereckigen Grundriss auf, wobei mindestens zwei unterschiedlich ausgeformte Zugangsseiten ausgebildet sind. In weiteren Ausführungsformen weist die Kapsel in ihrer Draufsicht alternativ ausgebildete geometrische Grundrissformen aus. Diese Zugangsseiten sind so geformt, dass Anpassungen an je eine konkave oder eine konvexe Rotorblattkontur erfolgen.

Dadurch legt der so geformte Grundriss der Kapsel den späteren Zugang zum Rotorblatt der WEA fest. Es wird somit beispielsweise- ohne darauf beschränkt zu sein- eine Kapsel mit einem trapezförmigen Grundriss gebildet, wobei die Grundrisskante, welche nicht im 90 °-Winkel an den anderen Kanten anliegt, in Richtung des Rotorblattes zeigt. Damit wird eine vorteilhafte Annäherung des Kapselbodens an die Rotorblatter erreicht und das Unfallrisiko für das in der Kapsel befindliche Anwenderpersonal deutlich gesenkt. In bevorzugten Ausführungsformen der Erfindung, in welchen die Kapsel in ihrer Draufsicht einen vierseitigen Grundriss aufweist und wobei an eine (Längs-)Seite zwei weitere zu sich selbst parallele Seiten im Winkel von 90 ° angrenzen, bildet die nicht-rechtwinklig verbundene Grundrisskante eine konkave Kontur aus. Neben der weiteren Erhöhung der Sicherheit des Anwenderpersonals wird durch das verbesserte Anschmiegen der Kapsel an das Rotorblatt der WEA während des Arbeitseinsatzes auch ein verbesserter Schutz des Anwenderpersonals vor Witterung gewährleistet.

In bevorzugten Ausführungsformen weist die Kapsel in Ihrer Draufsicht einen zumindest teilweise rechteckigen Grundriss auf, wobei die Abweichung zum rechteckigen Querschnitt darin besteht, dass eine der Längsseiten eine konkave oder konvexe Kontur aufweist Dies ist vorteilhaft, da somit der konstruktive Aufwand der Kapsel minimiert wird. Dies bietet wirtschaftliche Vorteile, da somit Zeit und Material bei der Fertigung gespart werden kann.

In bevorzugten Ausführungsformen der Erfindung sind die Aufhängungspunkte an der Vorrichtung derart angeordnet, dass ein Aufhängungspunkt während des Einsatzes im montierten Zustand der Befahranlage am Turm eine größere Nähe zum Turm, ein weiterer Aufhängungspunkt während des Einsatzes im montierten Zustand der Befahranlage eine größere Nähe zur Kapsel aufweist. Infolge dessen sind Turm und Kapsel diametral entgegengesetzt angeordnet. Der große Abstand zwischen den Aufhängungspunkten führt vorteilhaft zu eher erhöhen Stabilität der Vorrichtung in Längsrichtung.

In bevorzugten Ausführungsformen der Erfindung sind mindestens zwei Segmente des in Segmenten ausgebildeten Abdruckträgers teleskopartig ein- und ausfahrbar ausgebildet. In Folge dessen sind auch größere Abstände zwischen Turm und Rotorblatt überbrückbar. Dadurch ist die Befahranlage vorteilhaft an unterschiedliche Geometrien von WEAn anpassbar. Zusätzlich kann somit ein kompaktes Maß der Vorrichtung für Transportzwecke erreicht werden, da die Längenabmessungen innerhalb der für den jeweiligen Transport zulässigen Vorschriften, beispielsweise und ohne Beschränkung auf die StVO, gebracht werden kann.

In bevorzugten Ausführungsformen der Erfindung ist die Position von mindestens einer Rolle des Fahrwerks derart verstellbar ausgebildet, dass eine Adaption des Fahrwerks für verschiedene Turmdurchmesser ermöglicht wird. Dadurch ist vorteilhaft die Gewährleistung der Funktion des Führungssystems auch bei sich verjüngenden Turmdurchmessern von WEAn gegeben. In Folge dessen gewinnt die erfindungsgemäße Befahranlage einen Zuwachs des Einsatzbereiches, was sich wiederum vorteilhaft auf die Wirtschaftlichkeit der Vorrichtung auswirkt.

In bevorzugten Ausführungsformen der Erfindung weist mindestens ein Querträger mindestens einen schwenk- und klappbar ausgebildeten Seitenarm auf, an dessen beiden Enden jeweils mindestens ein Führungselement angeordnet ist, wobei das Schwenken des Seitenarms mittels eines Aktuators initiiert wird. In Ausführungsformen ist das Führungselement beispielsweise, ohne darauf beschränkt zu sein, als Führungsrolle bzw. als Kombination von Führungsrollen ausgebildet. Dadurch kann vorteilhaft der Abstand der Führungsrollen zur Turmoberfläche, unabhängig vom Durchmesser des Turms angepasst werden. Dies führt zu einer optimalen Stützwirkung bei jeder Befahrsituation. Der adaptive Seitenarm führt so zu einer sichereren und robusteren Führung am Turm und darüber hinaus zur Umfahrbarkeit möglicher Turmhindernisse, wie zum Beispiel Turmfeuer, Antennen etc.

In bevorzugten Ausführungsformen der Erfindung ist mindestens eine Raumachse zur Schwenkung des Querträgers in der Horizontalebene angeordnet. Dies ermöglicht vorteilhaft die Korrektur der Schwerpunktlage um eine weitere Achse und erhöht auf diese Weise die Stabilität der gesamten Vorrichtung durch Verringerung der Kippneigung. Dies hat eine vorteilhafte Verringerung des Einflusses von Seitenwinden zur Folge, was sich in einer generellen Verringerung der Unfallgefahr widerspiegelt.

In bevorzugten Ausführungsformen der Erfindung ist der Winkel zwischen einem Querträger und dem Abdruckträger durch mindestens einen Aktuator einstellbar ausgebildet. Dadurch kann vorteilhaft die Kippneigung der gesamten Vorrichtung derart beeinflusst werden, dass es zu deren Verringerung kommt, was eine Erhöhung der Sicherheit für das Anwenderpersonal darstellt. Darüber hinaus trägt die Schwenkbarkeit zur vorteilhaften Ausrichtung der Befahranlage in Bezug zum Rotorblatt bei.

In bevorzugten Ausführungsformen der Erfindung ist die Position mindestens eines Aufhängungspunkts entlang mindestens einer Raumrichtung beweglich ausgebildet. Dadurch wird vorteilhaft eine präzisere Einstellung der Schwerpunktsituation der gesamten Vorrichtung ermöglicht, was sich in einer deutlich höheren Stabilität der im Einsatz befindlichen Vorrichtung bewirkt.

In bevorzugten Ausführungsformen der Erfindung ist an der Kapsel mindestens ein Messmittel zur Messung der Zuladung angeordnet. In Ausführungsformen dient das Messmittel als Kraftmesseinrichtung. Es wird somit die Erfüllung der Sicherheitserfordernisse nach DIN EN 1808 gewährleistet. Zusätzlich sorgt der Einsatz derartiger Messmittel für eine verbesserte Kompaktheit der gesamten Vorrichtung, da auf redundante Sicherheitseinrichtungen zu Vermeidung von Überbeladung und/oder komplizierte Messanordnungen zur Bestimmung der aktuellen Zuladung verzichtet werden kann.

In bevorzugten Ausführungsformen der Erfindung ist die Kapsel mit einem Dichtsystem ausgestattet, wobei das Dichtsystem für eine wasserfeste Abdichtung zwischen mindestens einer Seite der Kapsel und einem Rotorblatt ausgebildet ist. Das Dichtsystem kann beispielsweise - ohne darauf beschränkt zu sein - eine Kombination aus umlaufenden Gummilippen zur Ausbildung einer Dichtfläche und Unterdruckerzeugung sein. Somit wird die Kapsel wasserdicht gegen das Rotorblatt gedrückt. In Folge dessen werden der Komfort und die Sicherheit des Anwenderpersonals bei Ausführung der bestimmungsgemäßen Wartungs- und Instandsetzungstätigkeiten deutlich erhöht. Auch kann auf diese Weise eine klimatisierte Kapsel in den Einsatz gebracht werden, was einige Instandsetzungsverfahren überhaupt erstermöglicht, da die zu verwendenden Materialien nur in den nun einstellbaren klimatischen Bedingungen anwendbar sind. Somit wird vorteilhaft eine weitere Erhöhung von Wirtschaftlichkeit und Anwendbarkeit erzielt.

Ein weiterer Aspekt der Erfindung betrifft die Verwendung der erfindungsgemäßen Vorrichtung einer Rotorblattbefahranlage zur Ermöglichung von Inspektionen und/oder lokalen Reparaturen und/oder Beschichtungen von hängenden Rotorblättern einer Windkraftanlage.

Für die Realisierung der Erfindung ist es auch zweckmäßig, die vorbeschriebenen Ausführungsformen und Merkmale der Ansprüche zu kombinieren. Die Erfindung ist nicht auf die dargestellten und beschriebenen Ausführungsformen beschränkt, sondern umfasst auch alle im Sinne der Erfindung gleich wirkenden Ausführungsformen. Ferner ist die Erfindung auch nicht auf die speziell beschriebenen Merkmalskombinationen beschränkt, sondern kann auch durch jede beliebige andere Kombination von bestimmten Merkmalen aller insgesamt offenbarten Einzelmerkmale definiert sein, sofern sich die Einzelmerkmale nicht gegenseitig ausschließen, oder eine spezifische Kombination von Einzelmerkmalen nicht explizit ausgeschlossen ist.

Der Schutzumfang ist durch die Patentansprüche definiert.

Nachfolgend soll die Erfindung anhand eines Ausführungsbeispiels eingehender erläutert werden. Das Ausführungsbeispiel bezieht sich auf eine Vorrichtung zur lokalen und/oder Reparatur und/oder Beschichtung von Rotorblättern und soll dabei die Erfindung beschreiben ohne diese zu beschränken Anhand von Zeichnungen wird die Erfindung näher erläutert. Dabei zeigen
Fig. 1: Gesamtansicht Rotorblattbefahranlage,
Fig. 2: Draufsicht Befahranlage: Beispielhafte Befahrsituationen zur Positionierung der Kapsel,
Fig. 3: Frontalansicht: Schräglagenausgleich der Kapsel um Längsachse des Abdruckträgers,
Fig. 4: Seitenansicht: Schwerpunktausgleich durch Rotation des Schrägseilarms und Anpassung des rückstellenden Moments,
Fig. 5: Seitenansicht: Teleskopartiger Abdruckträger.

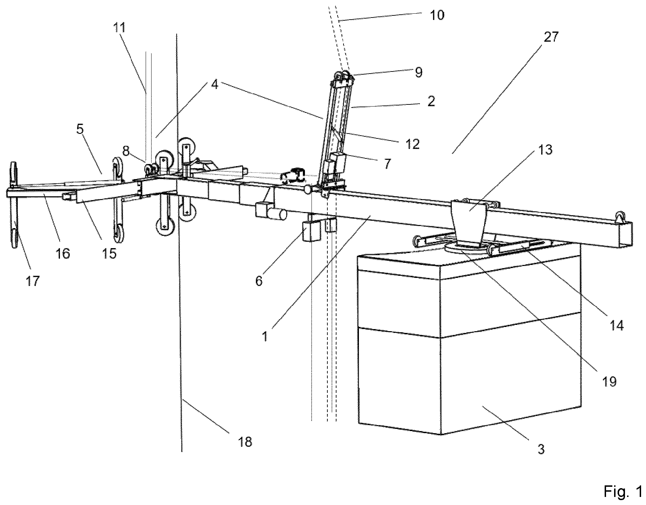

In Figur 1 ist skizzenhaft und schematisch die Rotorblattbefahranlage 27 gezeigt. Dabei sind die Komponenten Abdruckträger 1, Schrägseilarm 2, Kapsel 3, Aufhängungssystem 4 mit zwei Aufhängungspunkten, Fahrwerk 5, Seilwinde für turmnahes Tragseil 6, Seilwinde für turmabgewandtes Tragseil 7, turmnahe kraftumformende Einrichtung 8, turmabgewandte kraftumformende Einrichtung 9, turmabgewandtes Tragseil 10, turmnahes Tragseil 11, Aktuator für Schrägseilarm 12 sowie Kapselaufhängung mit Messmittel 13 und eine Verstellmöglichkeit der Kapsel 14 eingetragen. Zu erkennen ist dabei, dass sich das Fahrwerk 5 am Turm 18 abstützt. Dabei weist das Fahrwerk 5 einen Querträger 15 mit Seitenarmen 16 und mit Führungselementen 17, die sich am Turm der Windenergieanlage 18 abstützen, auf, und ist am Ende des Abdruckträgers 1 angeordnet. Am Abdruckträger 1 selbst ist die Kapsel 3 angeordnet, wobei sich zwischen Kapsel 3 und Abdruckträger 1 eine als Drehverbindung 19 ausgebildete Verstellmöglichkeit und die Kapselaufhängung mit Messmittel 13 befindet. Das Messmittel dient dabei zur Messung der aktuellen Kapselbeladung und die Drehverbindung 19 dient zur Änderung der Ausrichtung der Kapsel relativ zum Turm 18 - u. a. um den Zugang zur Kapsel und zu den Rotorblättern zu erleichtern.

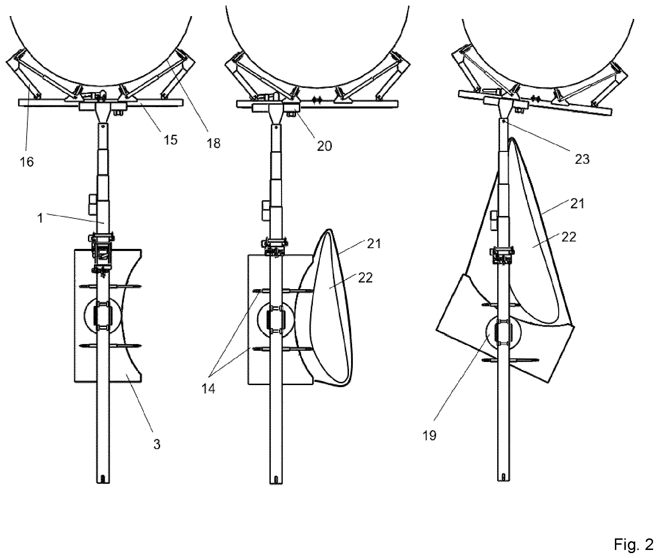

In Figur 2 sind skizzenhaft und schematisch verschiedene Draufsichten auf die Befahranlage 27 sowie auf die jeweiligen Turm- und Rotorblattsegmente in drei Teilabbildungen zu erkennen, an denen die Befahranlage operiert.

So wird in der linken Teilabbildung der Grundzustand der Befahranlage gezeigt. Dabei ist der Grundriss der Kapsel 3 zu erkennen, welcher beispielhaft einseitig konkav ausgebildet ist. Zusätzlich ist der Abdruckträger 1 derart am Turmsegment 18 angeordnet, dass der Abdruckträger 1 auf den Mittelpunkt des Turmsegmentes 18 ausgerichtet ist Der Winkel zwischen Abdruckträger 1 und Querträger 15 beträgt 90°.

In der mittleren Teilabbildung ist der Abdruckträger 1 nicht mit dem Mittelpunkt des dargestellten Turmsegmentes 18 in Flucht. Vielmehr wurde entlang des Querträgers 15 über die Horizontalverschiebungseinrichtung des Abdruckträgers 20 ein Versatz zum Abdruckträger 1 eingestellt, dabei wurde jedoch der Winkel zwischen Abdruckträger 1 und Querträger 15 von 90° beibehalten. Somit können beispielsweise ein ungünstiger Schwerpunkt, eine ungünstige Windsituation oder eine ungünstige Zugänglichkeit zum Rotorblatt 22 ausgeglichen werden. Um beim Einsatz am Rotorblatt 22 einen sicheren und definierten Abstand zu diesem zu gewährleisten wird die Kapsel durch eine Verstellmöglichkeit 14 am Rotorblatt 22 positioniert. Um eine zusätzliche Sicherung der Vorrichtung gegen Umschlagen zu realisieren, kann ein Ringseil 21 um das Rotorblatt 22 gelegt werden.

In der rechten Teilabbildung wird analog zur mittleren Teilabbildung der Abdruckträger 1 außerhalb der Mitte angeordnet. Zusätzlich nehmen Abdruckträger 1 und Querträger 15 Winkel verschieden von 90° ein, wobei sie um den Schwenkpunkt 23 bewegt werden. Es wird somit ein mehrfacher Versatz eingestellt. Somit kann beispielsweise das Fahrwerk 5 etwaige Hindernisse auf der Außenhülle des Turmes umfahren, ohne dass sich dies nachteilig auf den Schwerpunkt der Befahranlage auswirkt. Des Weiteren ist die Drehung der Kapsel 3 über die Drehverbindung 19 angedeutet, um eine vorteilhafte Positionierung am Rotorblatt 22 zu erreichen. Dabei zeigt nun der konkav geformte Rotorblattzugang weitestgehend in Richtung des Turmes 18.

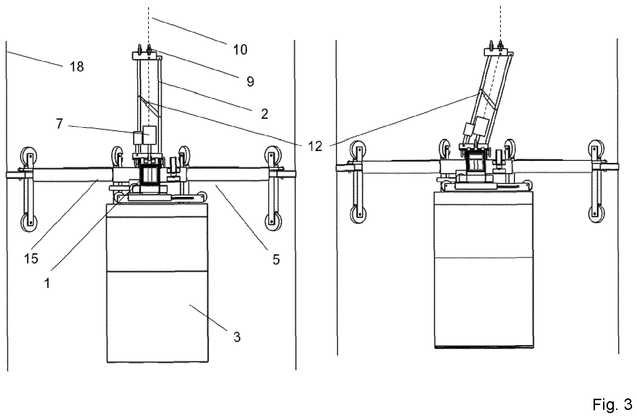

In Figur 3 sind zwei skizzenhaft schematische Teilabbildungen zu erkennen, wobei beide Teilabbildungen als Frontalansicht zu sehen sind. Dabei ist vordergründig die Kapsel 3 hängend am Abdruckträger 1 angeordnet und das Fahrwerk 5 drückt auf die hintergründig angedeutete Mantelfläche des Turms 18. Das turmabgewandte Seil 10 wird über die turmabgewandte kraftumformende Einrichtung 9 umgelenkt und ist an der Seilwinde für das turmabgewandte Tragseil 7 befestigt. Unterschiedlich dargestellt sind die Zustände des Schrägseilarms 2.

In der linken Teilabbildung verläuft der Schrägseilarm 2 in Flucht mit dem Turm 18. Die mit dem Querträger des Fahrwerks 15 eingeschlossenen Winkel betragen in dieser Ebene 90°. Diese Einstellung wird beispielsweise vorgenommen, wenn der Schwerpunkt der gesamten Befahranlage nahezu auf einer Vertikalachse ruht, deren Projektion durch die Mittelachse des Turmes in dieser Ebene verläuft.

In der rechten Teilabbildung weichen die Winkel zwischen Schrägseilarm 2 und dem Querträger des Fahrwerks 5 in der dargestellten Ebene von 90° ab. Diese Einstellung wird vorgenommen, wenn der Schwerpunkt der gesamten Befahranlage somit weitestgehend außerhalb jener Vertikalachse liegt, deren Projektion durch die Mittenachse des Turmes in dieser Ebene verläuft. Die Einstellung des Schrägseilarms erfolgt über einen Aktuator 12.

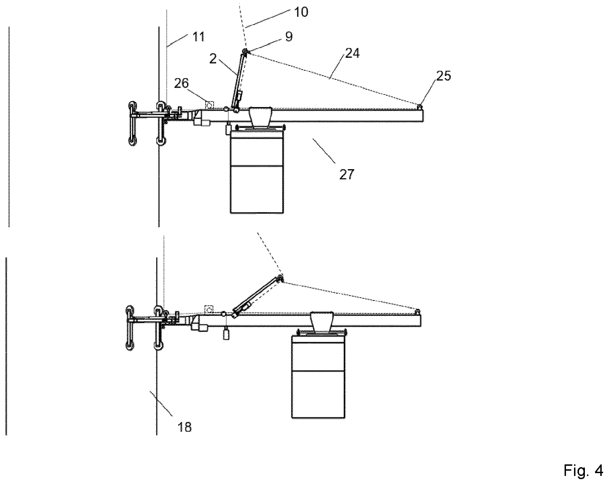

In Figur 4 werden - analog zu Figur 3 - zwei skizzenhafte Teilabbildungen von der Befahranlage in Seitenansicht gezeigt. Hierbei ist zu beachten, dass sich die Teilabbildungen jeweils untereinander befinden. Ebenfalls in Analogie zu Figur 3 werden unterschiedliche Stellungen des Schrägseilarms 2 gezeigt. So ist in der oberen der beiden Teilabbildungen der Schrägseilarm 2 nahezu vollständig aufgerichtet und in der unteren der beiden Teilabbildung deutlich flacher angeordnet. Dadurch ändert sich die Position zwischen turmabgewandter kraftumformender Einrichtung 9, die den Aufhängungspunkt des turmabgewandten Tragseils 10 darstellt, und dem Befestigungspunkt des Schrägseilarms am Abdruckträger. Das erzeugte, rückstellende Moment berücksichtigt die Lage des Schwerpunktes der Rotorblattbefahranlage 27 und stellt die Kraftwirkung auf das turmnahe Tragseil 11 ein. Der Schrägseilarm 2 wird in vorteilhafter Weise mittels eines Schrägseilarmseils 24 geschwenkt, welches über eine Umlenkrolle 25 zur Schrägseilarmwinde 26 geführt wird.

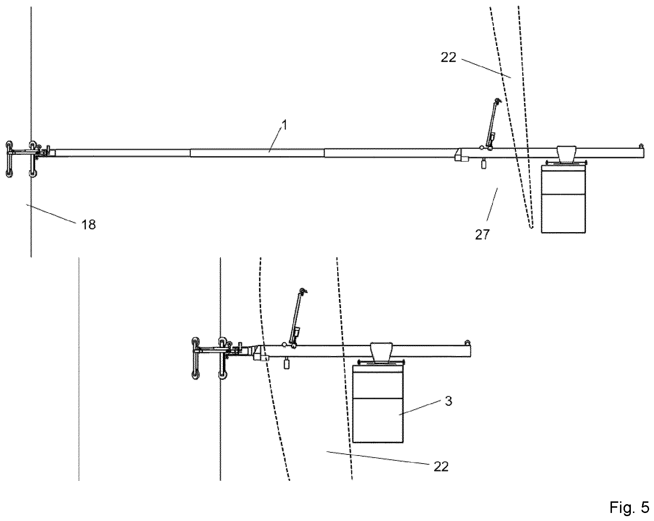

In Figur 5 sind - analog zu Figur 4 - zwei skizzenhafte Teilabbildungen von der Befahranlage 27 in Seitenansicht gezeigt. Auch hier ist zu beachten, dass sich die Teilabbildungen jeweils untereinander befinden. In beiden Teilabbildungen ist der Abdruckträger 1 als teleskopartiger Abdruckträger ausgebildet. Die beiden Teilabbildungen unterscheiden sich jedoch dadurch voneinander, dass der Abdruckträger 1 unterschiedliche Längen aufweist. So ist in der oberen der beiden Teilabbildungen der Abdruckträger 1 nahezu vollständig ausgefahren und in der unteren der beiden Teilabbildungen nahezu vollständig eingefahren. Dadurch lassen sich verschiedene Abstände von Turm 18 zu Rotorblatt 22 überbrücken.

In einem Ausführungsbeispiel weist der Gesamtaufbau der Vorrichtung zunächst eine wettergeschützte Kapsel 3 zur Beherbergung von mindestens drei Personen auf. Die Kapsel 3 hat dazu die Abmessungen von (3 x 1,5 x 2) m³. Des Weiteren ist die Kapsel durch umfassende Verstellmöglichkeiten in Form von manuellen Verstellmechanismen und elektrischen Aktuatoren in der x, y und z-Achse lokal an nahezu beliebiger Stelle des Rotorblatts positionierbar.

Dies Kapsel selbst ist hängend direkt an einem Abdruckträger 1 befestigt. Der Abdruckträger 1 besteht aus einem einzigen Träger mit vier Segmenten, die teleskopartig ein- und ausgefahren werden können: Im eingefahrenen Zustand misst der Abdruckträger 7m und lässt sich bis zu 21 m ausfahren. Am Abdruckträger sind mittelbar und unmittelbar zwei elektrisch betriebene Seilwinden 6, 7 angebracht, deren Seile über die als Umlenkrollen ausgebildeten kraftumformenden Einrichtungen 8, 9 ein Aufhängen der Vorrichtung an der Windenergieanlage ermöglichen. Durch diese Seilwinden kann die Vorrichtung nach oben und unten bewegt werden. Die Umlenkrolle des einen Seils 11 ist dabei nah am Turm 18, die des anderen 10 ist turmfern angeordnet. Die Umlenkrollen 8, 9 fungieren als physikalische Aufhängungspunkte der Befahranlage und nehmen dabei einen variablen Abstand je nach Zustand des Abdruckträgers von 5 m bis 19 m zueinander ein.

Am turmseitigen Ende des Abdruckträgers 1 ist ein Querträger 15 mit vier Führungselementen 17, ausgebildet aus jeweils zwei Rollen angeordnet, die ein vertikales Entlangrollen am Turm 18 ermöglichen. Der Querträger 15 samt Seitenarmen 16 und Führungselementen 17 wird als Fahrwerk 5 bezeichnet. Im Betrieb stützt sich der Abdruckträger mit diesem Fahrwerk 5 am Turm 18 ab und stellt so die gewünschte Distanz zwischen Abdruckträger 1 und Turm 18 sicher. Der Abdruckträger 1 ist seinerseits entlang des Querträgers 15 um bis zu 1 m verschiebbar. Die Position aller acht am Querträger 15 angeordneten Rollen lasst sich über den Seitenarm 16 verstellen, um auf diese Weise das Fahrwerk 15 auf verschiedene Turmdurchmesser anzupassen.

Im vorliegenden Beispiel ist der Querträger 15 mit schwenkbaren Seitenarmen 16 ausgestattet, die sich mittels Aktuatoren verschieben lassen und an deren äußeren Enden jeweils zwei Führungselemente 17 angeordnet sind, die mit jeweils zwei Rollen ausgestattet sind.

Der Querträger 15 ist gelenkig in Horizontalebene und steif in Vertikalebene mit dem Abdruckträger 1 verbunden. Durch zwei Aktuatoren lässt sich der Winkel zwischen dem Querträger 15 und dem Abdruckträger 1 gezielt in einem Bereich von 0° bis 10° einstellen. Dadurch kann die Position der Kapsel 3 in die Horizontalebene gezielt eingestellt werden. Zur Verringerung der Transportbreite ist der Querträger 15 darüber hinaus auch um seinen Schwenkpunkt 23 einklappbar ausgestaltet.

Die Kapsel 3 selbst ist am turmfernsten Segment des Abdruckträgers 1 aufgehängt und kann in Längsrichtung dieses Segments um bis zu 5 m verschoben werden. Durch die Aufhängung an einer Drehverbindung 19 ist die Kapsel um bis zu 360° rotierbar. Sie besitzt an ihrem Dach einen zentralen Aufhängungspunkt mit integrierter Messung der Zuladung 13. Die Kapsel 3 ist so ausgestaltet, dass sich eine der Längsseiten an die Geometrie des vorliegenden Rotorblattes 22 anschmiegt. Diese Schnittstelle zwischen Kapsel 3 und Rotorblatt 22 ist mit einem flexiblen Dichtsystem ausgestattet, das eine wasserfeste Abdichtung zwischen Kapsel 3 und Rotorblatt 22 ermöglicht.

Die gesamte Vorrichtung wird durch die Seile 10, 11 getragen. Dabei befinden sich die Seilwinden 6, 7 nicht direkt an den Aufhängungspunkten der Rotorblattbefahranlage. Die Seilwinden sind zentral am turmfernsten Segment des Abdruckträgers 1 angeordnet, um jederzeit auch von der Kapsel 3 aus erreichbar zu sein. Die Seile werden von dort aus über am Abdruckträger 1 angebrachte kraftumformende Einrichtungen 8, 9 zu den Aufhängungspunkten an der Windenergieanlage geleitet.

Die kapselnahe Umlenkung ist am Schrägseilarm 2 angeordnet, der am turmfernsten Segment des Abdruckträgers 1 befestigt und in den Vertikalebenen schwenkbar gestaltet ist. Durch diese Verstellmöglichkeit kann das Schrägseil und somit die Horizontalkraft in Richtung Turm gezielt eingestellt werden. Dieser speziell ausgebildete Schrägseilarm 2 wird auch Schwenkarm genannt.

Der Schwenkarm 2 ist in diesem Beispiel in seiner Mechanik wie folgt charakterisiert:
Das turmabgewandte Seil 10 wird über eine Umlenkung geführt, die am Ende eines in der Vertikalebene schwenkbaren Schrägseilarms 2 angeordnet ist. Durch die Verstellmöglichkeit des Schrägseilarmes 2 kann das Schrägseil und somit die Horizontalkraft in Richting Turm gezielt eingestellt werden. Der Schrägseilarm 2 führt zudem zu einer Erhöhung des vertikalen Abstands zwischen der physikalischen Aufhängung der Rotorblattbefahranlage (Umlenkrolle) und dem Kapselschwerpunkt. Dadurch ist die Neigung der Vorrichtung in einem Bereich von -10° bis +10° einstellbar. Kommt es im Betrieb zur Verschiebung der variablen Masse in der Kapsel, beispielsweise durch sich bewegende Personen, so neigt die ungestörte Vorrichtung zu einer Rotation um seine Längsachse. Um diese Rotation der Vorrichtung um die Längsachse gezielt ausgleichen zu können, wird die Position des Aufhängungspunkts der Umlenkrolle entlang der Querrichtung der Vorrichtung verstellt. Die Positionierung erfolgt entweder manuell oder entsprechend des Neigungswinkels von bis zu 10° automatisch mit Hilfe von einem oder mehreren Aktuatoren.

Auch wird durch gezieltes Bewegen des Schrägseilarmes 2 die Vorrichtung gegen Umkippen um die Querachse gesichert, selbst wenn sich der Gesamtschwerpunkt auf der turmfernen Seite der Aufhängung befindet: das an der Umlenkrolle des Schrägseilarmes 2 angreifende Schrägseil besitzt in Längsrichtung des Turmes einen Hebelarm, der bei Schrägseil und der dadurch immer in Turmrichtung auftretenden Horizontalkraft zu einem Drehmoment um die Querachse führt. Das turmnahe Seil wird dadurch gespannt. Dieses Drehmoment verstärkt sich, sobald die Vorrichtung beginnt, um die Querachse zu kippen. Hebt sich in Folge der Kippung das Fahrwerk 5, so entspannt sich das turmnahe Seil, da sich in diesem Moment das Schrägseil verstärkt und eine höhere Horizontalkraft in Richtung Turm am Hebelarm wirkt.

Um die für den Straßentransport zugelassene Höhe nicht zu überschreiten, kann der Schrägseilarm 2 im "Transportmodus" horizontal abgelegt werden. Der Schrägseilarm 2 ist somit um einen Winkel von 20° bis 90° schwenkbar.

### Bezugszeichen

- (1): Abdruckträger
- (2): Schrägseilarm
- (3): Kapsel
- (4): Aufhängungssystem
- (5): Fahrwerk
- (6): Seilwinde für turmnahes Tragseil
- (7): Seilwinde für turmabgewandtes Tragseil / Winde Schrägseilarm
- (8): turmnahe kraftumformende Einrichtung
- (9): turmabgewandte kraftumformende Einrichtung
- (10): turmabgewandtes Tragseil
- (11): turmnahes Tragseil
- (12): Aktuator für Schrägseilarm
- (13): Kapselaufhängung mit Messmittel
- (14): Verstellmöglichkeit der Kapsel
- (15): Querträger
- (16): Seitenarm
- (17): Führungselement
- (18): Turm Windenergieanlage
- (19): Drehverbindung
- (20): Horizontalverschiebungsvorrichtung Abdruckträger
- (21): Ringseil
- (22): Rotorblatt
- (23): Schwenkpunkt Abdruckträger/Querträger
- (24): Schrägseilarmseil
- (25): Umlenkrolle Schrägseilarmseil
- (26): Winde Schrägseilarm
- (27): Rotorblattbefahranlage

## Patentansprüche

1. Vorrichtung zur lokalen Inspektion und/oder Reparatur und/oder Beschichtung von Rotorblättern einer Windenergieanlage, umfassend mindestens einen Turm, aufweisend als Komponenten
• mindestens eine wettergeschützte Kapsel (3) zur Beherbergung von Personen,
• mindestens einen in Segmenten ausgebildeten Abdruckträger (1), umfassend mindestens ein Segment mit einem Schrägseilarm (2), wobei der Schrägseilarm (2) mindestens eine kraftumformende Einrichtung (9) aufweist,
• mindestens einen Querträger (15),
• mindestens ein Fahrwerk (5) sowie
• ein Aufhängungssystem (4), welches die Komponenten verbindet, umfassend mindestens zwei Aufhängungspunkte, wobei mindestens zwei Aufhängungspunkte am Abdruckträger (1) angeordnet sind, mindestens eine kraftumformende Einrichtung (8, 9), sowie mindestens zwei Seilwinden (6, 7),
wobei die Kapsel (4)
• hängend am turmfernsten Segment des Abdruckträgers (1) befestigt ist,
• mindestens eine Verstellmöglichkeit (14) aufweist, wobei die mindestens eine Verstellmöglichkeit (14) dazu ausgebildet ist, die Kapsel (3) in mindestens einer der orthogonalen Raumachsen gezielt zu positionieren,
wobei der in Segmenten ausgebildete Abdruckträger (1) mit mindestens einer kraftumformenden Einrichtung (8, 9)
• sich am Turm abstützt und
• entlang des Querträgers (15) verschiebbar ausgebildet ist und
wobei am turmseitigen Segment des Abdruckträgers (1) das Fahrwerk (5) angeordnet ist und das Fahrwerk (5) mindestens einen Querträger (15) umfasst, welcher mit mindestens einem Führungselement (17) ausgestattet ist,
wobei der Querträger (15) schwenkbar um mindestens eine Raumachse ausgebildet ist, und
wobei die mindestens zwei Seilwinden (6, 7) des Aufhängungssystems am turmfernsten Segment des Abdruckträgers (1) angeordnet ist, wobei mindestens ein Seil von der jeweiligen Seilwinde (6, 7) über deren kraftumformende Einrichtung (8, 9) zu den Aufhängungspunkten an der Windkraftanlage geleitet wird,
wobei mindestens eine kraftumformende Einrichtung (9) am Schrägseilarm (2), der am turmfernsten Segment des Abdruckträgers (1) angeordnet ist, angeordnet und entlang seiner Längs- und Querachse schwenkbar ausgebildet ist.

2. Vorrichtung nach Anspruch 1, **dadurch gekennzeichnet, dass** die Kapsel (3) beweglich entlang der Längsrichtung mindestens eines Segments des Abdruckträgers (1) angeordnet ist.

3. Vorrichtung nach Anspruch 1 oder 2, **dadurch gekennzeichnet, dass** die Kapsel (3) hängend in ihrer Horizontalebene zur Drehung um mindestens 180 ° und bis zu 360 ° ausgebildet ist.

4. Vorrichtung nach einem der Ansprüche 1 bis 3, **dadurch gekennzeichnet, dass** die Kapsel (3) in ihrer Draufsicht mindestens zwei unterschiedlich ausgeformte Zugangsseiten aufweist, wobei diese Zugangsseiten Anpassungen an je eine konkave und/oder eine konvexe Rotorblattkontur aufweisen.

5. Vorrichtung nach einem der Ansprüche 1 bis 4, **dadurch gekennzeichnet, dass** die Kapsel (3) in ihrer Draufsicht einen zumindest teilweise rechteckigen Querschnitt ausweist, wobei die Abweichung zum rechteckigen Querschnitt darin besteht, dass eine der Längsseiten eine konkave oder konvexe Kontur aufweist.

6. Vorrichtung nach einem der Ansprüche 1 bis 5, **dadurch gekennzeichnet, dass** die Aufhängungspunkte an der Vorrichtung derart angeordnet sind, dass ein Aufhängungspunkt im montierten Zustand eine größere Nähe zum Turm, ein weiterer Aufhängungspunkt im montierten Zustand eine größere Nähe zur Kapsel (3) aufweist, wobei Turm und Kapsel (3) diametral entgegengesetzt angeordnet sind.

7. Vorrichtung nach einem der Ansprüche 1 bis 6, **dadurch gekennzeichnet, dass** mindestens zwei Segmente des in Segmenten ausgebildeten Abdruckträgers (1) teleskopartig ein- und ausfahrbar ausgebildet sind.

8. Vorrichtung nach einem der Ansprüche 1 bis 7, **dadurch gekennzeichnet, dass** die Position von mindestens einem Führungselement (17) des Fahrwerks (5) derart verstellbar ausgebildet ist, dass eine Adaption des Fahrwerks (5) für verschiedene Turmdurchmesser ermöglicht ist.

9. Vorrichtung nach einem der Ansprüche 1 bis 8, **dadurch gekennzeichnet, dass** mindestens ein Querträger (15) mindestens einen schwenk- und klappbar ausgebildeten Seitenarm aufweist, an dessen beiden Enden jeweils eine Führungsrolle angeordnet ist, wobei das Schwenken des Seitenarms mittels eines Aktuators (12) initiiert wird.

10. Vorrichtung nach einem der Ansprüche 1 bis 9, **dadurch gekennzeichnet, dass** mindestens eine Raumachse zur Schwenkung des Querträgers (15) in der Horizontalebene angeordnet ist.

11. Vorrichtung nach einem der Ansprüche 1 bis 10, **dadurch gekennzeichnet, dass** der Winkel zwischen einem Querträger (15) und dem Abdruckträger (1) durch mindestens einen Aktuator (12) einstellbar ausgebildet ist.

12. Vorrichtung nach einem der Ansprüche 1 bis 11, **dadurch gekennzeichnet, dass** die Position mindestens eines Aufhängungspunktes entlang mindestens einer Raumrichtung beweglich ausgebildet ist.

13. Vorrichtung nach einem der Ansprüche 1 bis 12, **dadurch gekennzeichnet, dass** an derKapsel (4) mindestens ein Messmittel zur Messung der Zuladung angeordnet ist.

14. Vorrichtung nach einem der Ansprüche 1 bis 13, **dadurch gekennzeichnet, dass** die Kapsel (3) mit einem Dichtsystem ausgestattet ist, wobei das Dichtsystem für eine wasserfeste Abdichtung zwischen mindestens einer Seite der Kapsel (3) und einem Rotorblatt ausgebildet ist.

15. Verwendung einer Vorrichtung nach einem der Ansprüche 1 bis 14 zur Inspektion und/oder lokalen Reparatur und/oder Beschichtung von hängenden Rotorblättern einer Windkraftanlage.

## Claims

1. Apparatus for local inspection and/or repair and/or coating of rotor blades of a wind turbine, comprising at least one tower, having as components
• at least one weather-protected capsule (3) for sheltering people,
• at least one impression carrier (1) formed in segments, comprising at least one segment having a cable-stayed arm (2), wherein the cable-stayed arm (2) has at least one force-forming device (9),
• at least one cross-member (15),
• at least one undercarriage (5) as well as
• a suspension system (4) which connects the components, comprising at least two suspension points, wherein at least two suspension points are arranged on the impression carrier (1), at least one force-forming device (8, 9), and at least two cable winches (6, 7),
wherein the capsule (4)
• is fastened in a suspended manner from the segment of the impression carrier furthest from the tower (1),
• has at least one adjustment means (14),
wherein the at least one adjustment means (14) is designed
to specifically position the capsule (3) in at least one of the orthogonal spatial axes,
wherein the impression carrier (1) formed in segments having at least one force-forming device (8, 9)
• is supported on the tower and
• is designed to be movable along the cross-member (15), and
wherein the undercarriage (5) is arranged on the tower-side segment of the impression carrier (1), and the undercarriage (5) comprises at least one cross-member (15) which is equipped with at least one guiding element (17),
wherein the cross-member (15) is designed to be pivotable about at least one spatial axis, and
wherein the at least two cable winches (6, 7) of the suspension system are arranged on the segment of the impression carrier (1) furthest from the tower, wherein at least one cable is guided from the corresponding cable winch (6, 7) via its force-forming device (8, 9) to the suspension points on the wind turbine,
wherein at least one force-forming device (9) is arranged on the cable-stayed arm (2), which is arranged on the segment of the impression carrier (1) furthest from the tower, and is designed to be pivotable along its longitudinal and transverse axis.

2. Apparatus according to claim 1, **characterised in that** the capsule (3) is arranged movably in the longitudinal direction of at least one segment of the impression carrier (1).

3. Apparatus according to either claim 1 or claim 2, **characterised in that** the capsule (3) is designed to be suspended in its horizontal plane for rotation by at least 180° and up to 360°.

4. Apparatus according to any of claims 1 to 3, **characterised in that** the capsule (3) has, in its plan view, at least two differently shaped access sides, these access sides having adaptations in each case to a concave and/or a convex rotor blade contour.

5. Apparatus according to any of claims 1 to 4, **characterised in that** the capsule (3) has, in its plan view, an at least partially rectangular cross-section, the deviation from the rectangular cross-section consisting **in that** one of the longitudinal sides has a concave or convex contour.

6. Apparatus according to any of claims 1 to 5, **characterised in that** the suspension points are arranged on the apparatus in such a way that one suspension point in the mounted state has a greater proximity to the tower and a further suspension point in the mounted state has a greater proximity to the capsule (3), the tower and the capsule (3) being arranged diametrically opposite to one another.

7. Apparatus according to any of claims 1 to 6, **characterised in that** at least two segments of the impression carrier (1) formed in segments are designed to be telescopically retractable and extendable.

8. Apparatus according to any of claims 1 to 7, **characterised in that** the position of at least one guiding element (17) of the undercarriage (5) is designed to be adjustable in such a way that an adaptation of the undercarriage (5) for different tower diameters is made possible.

9. Apparatus according to any of claims 1 to 8, **characterised in that** at least one cross-member (15) has at least one pivotable and foldable side arm, at each of the two ends of which a guiding roller is arranged, the pivoting of the side arm being initiated by means of an actuator (12).

10. Apparatus according to any of claims 1 to 9, **characterised in that** at least one spatial axis for pivoting the cross-member (15) is arranged in the horizontal plane.

11. Apparatus according to any of claims 1 to 10, **characterised in that** the angle between a cross-member (15) and the impression carrier (1) is designed to be adjustable by at least one actuator (12).

12. Apparatus according to any of claims 1 to 11, **characterised in that** the position of at least one suspension point is designed to be movable in at least one spatial direction.

13. Apparatus according to any of claims 1 to 12, **characterised in that** at least one measuring device for measuring the additional load is arranged on the capsule (4).

14. Apparatus according to any of claims 1 to 13, **characterised in that** the capsule (3) is equipped with a sealing system, the sealing system being designed for a water-resistant sealing between at least one side of the capsule (3) and a rotor blade.

15. Use of an apparatus according to any of claims 1 to 14 for inspection and/or local repair and/or coating of suspended rotor blades of a wind turbine.

## Revendications

1. Dispositif pour l'inspection locale et/ou la réparation et/ou le revêtement de pales de rotor d'une éolienne, comprenant au moins une tour, présentant comme composants
• au moins une capsule (3) protégée des intempéries pour héberger des personnes,
• au moins un support d'appui (1) réalisé en segments, comprenant au moins un segment comportant un bras d'hauban (2), dans lequel le bras d'hauban (2) présente au moins un appareil de transformation de force (9),
• au moins une poutre transversale (15),
• au moins un châssis (5) ainsi que
• un système de suspension (4) qui relie les composants, comprenant au moins deux points de suspension, dans lequel au moins deux points de suspension sont disposés sur le support d'appui (1), au moins un appareil de transformation de force (8, 9), ainsi qu'au moins deux treuils à câble (6, 7),
dans lequel la capsule (4)
• est fixée de manière à être suspendue au segment le plus éloigné de la tour du support d'appui (1),
• présente au moins un moyen permettant le réglage (14),
dans lequel l'au moins un moyen permettant le réglage (14) est conçu pour positionner la capsule (3) de manière ciblée dans au moins l'un des axes orthogonaux de l'espace,
dans lequel le support d'appui (1) réalisé en segments, avec au moins un appareil de transformation de force (8, 9),
• s'appuie sur la tour et
• est réalisé de manière à pouvoir se déplacer le long de la poutre transversale (15) et
dans lequel le châssis (5) est disposé sur le segment côté tour du support d'appui (1) et le châssis (5) comprend au moins une poutre transversale (15) qui est équipée d'au moins un élément de guidage (17),
dans lequel la poutre transversale (15) est réalisée de manière à pouvoir pivoter autour d'au moins un axe de l'espace, et
dans lequel les au moins deux treuils à câble (6, 7) du système de suspension sont disposés sur le segment le plus éloigné de la tour du support d'appui (1), dans lequel au moins un câble est dirigé du treuil à câble (6, 7) respectif, par l'intermédiaire de son appareil de transformation de force (8, 9), jusqu'aux points de suspension sur l'éolienne,
dans lequel au moins un appareil de transformation de force (9) est disposé sur le bras d'hauban (2) qui est disposé sur le segment le plus éloigné de la tour du support d'appui (1), et est réalisé de manière à pouvoir pivoter le long de son axe longitudinal et de son axe transversal.

2. Dispositif selon la revendication 1, **caractérisé en ce que** la capsule (3) est disposée mobile le long de la direction longitudinale d'au moins un segment du support d'appui (1).

3. Dispositif selon la revendication 1 ou 2, **caractérisé en ce que** la capsule (3) est réalisée de manière à être suspendue dans son plan horizontal pour une rotation d'au moins 180° et jusqu'à 360°.

4. Dispositif selon l'une des revendications 1 à 3, **caractérisé en ce que** la capsule (3) présente, dans sa vue de dessus, au moins deux côtés d'accès de formes différentes, dans lequel lesdits côtés d'accès présentent des adaptations à respectivement un contour de pale de rotor concave et/ou un contour de pale de rotor convexe.

5. Dispositif selon l'une des revendications 1 à 4, **caractérisé en ce que** la capsule (3) présente, dans sa vue de dessus, une section transversale au moins partiellement rectangulaire, dans lequel l'écart par rapport à la section transversale rectangulaire consiste **en ce que** l'un des côtés longitudinaux présente un contour concave ou convexe.

6. Dispositif selon l'une des revendications 1 à 5, **caractérisé en ce que** les points de suspension sont disposés sur le dispositif de telle sorte qu'un point de suspension, dans l'état monté, présente une plus grande proximité de la tour, un autre point de suspension, dans l'état monté, présente une plus grande proximité de la capsule (3), dans lequel la tour et la capsule (3) sont disposées de manière à être diamétralement opposées.

7. Dispositif selon l'une des revendications 1 à 6, **caractérisé en ce qu'**au moins deux segments du support d'appui (1) réalisé en segments sont réalisés de manière à pouvoir être rentrés et sortis de manière télescopique.

8. Dispositif selon l'une des revendications 1 à 7, **caractérisé en ce que** la position d'au moins un élément de guidage (17) du châssis (5) est réalisée de manière à pouvoir être réglée de telle sorte qu'une adaptation du châssis (5) à différents diamètres de tour est rendue possible.

9. Dispositif selon l'une des revendications 1 à 8, **caractérisé en ce qu'**au moins une poutre transversale (15) présente au moins un bras latéral réalisé de manière à pouvoir pivoter et être rabattu, aux deux extrémités duquel est disposé respectivement un galet de guidage, dans lequel le pivotement du bras latéral est initié au moyen d'un actionneur (12).

10. Dispositif selon l'une des revendications 1 à 9, **caractérisé en ce qu'**au moins un axe de l'espace pour le pivotement de la poutre transversale (15) est disposé dans le plan horizontal.

11. Dispositif selon l'une des revendications 1 à 10, **caractérisé en ce que** l'angle entre une poutre transversale (15) et le support d'appui (1) est réalisé de manière à pouvoir être réglé par au moins un actionneur (12).

12. Dispositif selon l'une des revendications 1 à 11, **caractérisé en ce que** la position d'au moins un point de suspension est réalisée de manière à être mobile le long d'au moins une direction de l'espace.

13. Dispositif selon l'une des revendications 1 à 12, **caractérisé en ce qu'**au moins un moyen de mesure pour la mesure de la charge est disposé sur la capsule (4).

14. Dispositif selon l'une des revendications 1 à 13, **caractérisé en ce que** la capsule (3) est équipée d'un système d'étanchéité, dans lequel le système d'étanchéité est réalisé pour assurer l'étanchéité à l'eau entre au moins un côté de la capsule (3) et une pale de rotor.

15. Utilisation d'un dispositif selon l'une des revendications 1 à 14 pour l'inspection et/ou la réparation locale et/ou le revêtement de pales de rotor suspendues d'une éolienne.
